# EUROPEAN PATENT APPLICATION

(11) **EP 4 131 587 A1**
(43) Date of publication of application: **08.02.2023**
(21) Application number: 21775186.6
(22) Date of filing: 12.03.2021
(51) Int. Cl.: H01M 50/107, H01M 50/167

(54) **CYLINDRICAL BATTERY**

(30) Priority: 25.03.2020 JP 2020053722
(71) Applicant: SANYO Electric Co., Ltd., Daito-shi Osaka 574-8534 (JP)
(72) Inventor: HARAGUCHI, Shin, Chuo-ku, Osaka-shi, Osaka 540-6207 (JP)
(74) Representative: Novagraaf International SA
(86) International application number: PCT/JP2021/009987
(87) International publication number: WO 2021/193133

(57) **Abstract**

The purpose of the present disclosure is to provide a cylindrical battery for which it is possible to extend a crimped part to a greater length while suppressing deformation of a sealing body. The cylindrical battery according to an exemplary embodiment comprises a bottomed cylindrical outer can, a sealing body that closes an opening in the outer can, and a gasket interposed between the outer can and the sealing body. On the outer can, an edge of the opening is curved inward, and a crimped part is formed pressing the sealing body via the gasket. The crimped part includes: a base-end-side part that is inclined so that the gap with the sealing body becomes smaller toward the inside of the outer can; and a tip-end-side part that is inclined at a smaller angle at the sealing-body side than the base-end-side part, or is parallel to the bottom surface part of the outer can, or is inclined so that the gap with the sealing body becomes larger toward the tip end.

## Description

### TECHNICAL FIELD

The present disclosure relates to a cylindrical battery.

### BACKGROUND ART

There has been widely known a cylindrical battery comprising an outer can that has a bottomed cylindrical shape, a sealing assembly that seals an opening of the outer can, and a gasket interposed between the outer can and the sealing assembly (for example, see PATENT LITERATURES 1 and 2). The outer can generally has a crimped part formed by bending inward an edge part of the opening to press the sealing assembly with a gasket interposed therebetween. In the cylindrical battery, for example, a positive electrode lead is connected to an inner surface of the sealing assembly so that the sealing assembly serves as a positive electrode external terminal, and a negative electrode lead is connected to an inner surface of the outer can so that the outer can serves as a negative electrode external terminal.

### CITATION LIST

### PATENT LITERATURE

PATENT LITERATURE 1: Japanese Unexamined Patent Application Publication No. 2009-152031
PATENT LITERATURE 2: Japanese Translation of PCT International Application Publication No. 2010-512638

### SUMMARY

### TECHNICAL PROBLEM

However, a plurality of cylindrical batteries are electrically connected into a module in some instances, and an external lead is connected to the positive electrode external terminal and the negative electrode external terminal. At this time, to reduce the size of the battery module, the external lead is connected to the crimped part proximate to the sealing assembly in the outer can serving as the negative electrode external terminal in some instances. In this case, in order to increase a connection area of the external lead to improve the workability of the lead connection work, it is conceivable to extend the crimped part. However, when the length of the crimped part is simply increased, the sealing assembly receives a large pressure from the crimped part, and is easily deformed. When the sealing assembly is deformed, there may occur such problems that the variation in the operating pressure of a safety vent provided in the sealing assembly is increased, and that a connection position is not stabilized when the external lead is connected to the sealing assembly.

### SOLUTION TO PROBLEM

The cylindrical battery of an aspect of the present disclosure comprises an outer can that has a bottomed cylindrical shape, a sealing assembly that seals an opening of the outer can, and a gasket interposed between the outer can and the sealing assembly, wherein the outer can has a crimped part formed by bending inward an edge part of the opening to press the sealing assembly with the gasket interposed between the crimped part and the sealing assembly, and the crimped part includes a proximal end side portion that is inclined so that a distance between the crimped part and the sealing assembly decreases toward an inside of the outer can, and a distal end side portion that is inclined toward the sealing assembly side at an angle smaller than an angle at the proximal end side portion, is parallel to a bottom of the outer can, or is inclined so that a distance between the crimped part and the sealing assembly increases toward a distal end.

### ADVANTAGEOUS EFFECTS OF DRAWING

According to the cylindrical battery of an aspect of the present disclosure, a crimped part can be extended while reducing deformation of a sealing assembly. Accordingly, the connection area of the external lead in the crimped part can be sufficiently ensured without causing deterioration of the performance due to the deformation of the sealing assembly, and the workability of the lead connection work can be improved when the cylindrical battery is made into a module.

### BRIEF DESCRIPTION OF DRAWING

FIG. 1 is a longitudinal sectional view of a cylindrical battery of an example of an embodiment.
FIG. 2 is an enlarged view of parts of a grooved part, a crimped part and a sealing assembly of an outer can, which are illustrated in FIG. 1.
Fig. 3 is a diagram for describing a configuration of the crimped part.

### DESCRIPTION OF EMBODIMENTS

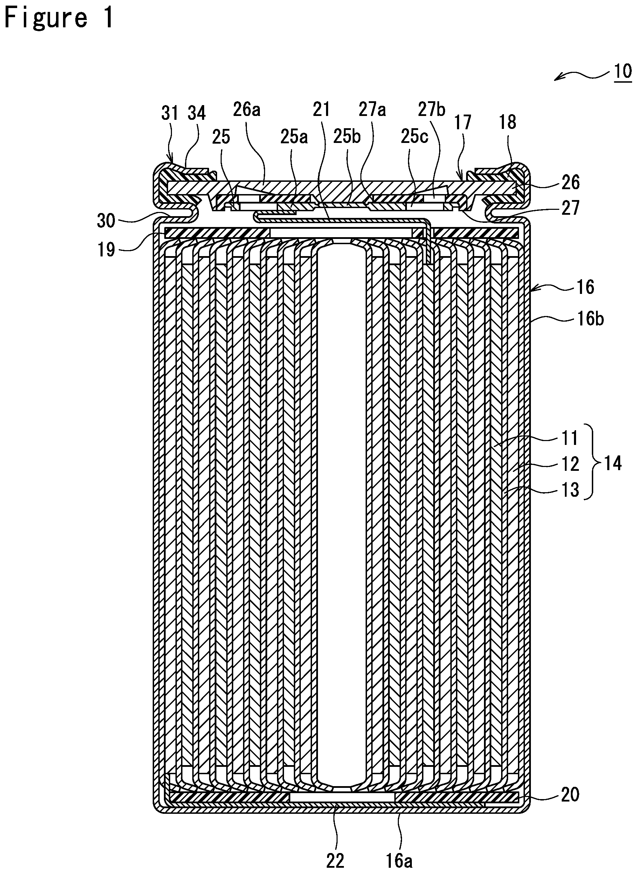

Hereinafter, an example of an embodiment of a cylindrical battery according to the present disclosure will be described in detail with reference to the drawings. FIG. 1 is a sectional view of a cylindrical battery 10 of an example of an embodiment.

As illustrated in FIG. 1, the cylindrical battery 10 comprises an outer can that has a bottomed cylindrical shape 16 including a bottom 16a and a side wall 16b, a sealing assembly 17 that seals an opening of the outer can 16, and a gasket 18 interposed between the outer can 16 and the sealing assembly 17. The cylindrical battery 10 comprises an electrode assembly 14 and an electrolyte that are housed in the outer can 16. The electrode assembly 14 includes a positive electrode 11, a negative electrode 12, and a separator 13, and has a wound structure in which the positive electrode 11 and the negative electrode 12 are spirally wound with the separator 13 interposed therebetween.

In this specification, for convenience of explanation, the direction along an axial direction of the outer can 16 is defined as a "longitudinal direction or an up-and-down direction," the sealing assembly 17 side (an opening side of the outer can 16) of the cylindrical battery 10 is defined as "up," and the bottom 16a side of the outer can 16 is defined as "lower."

The positive electrode 11 has a positive electrode core, and a positive electrode mixture layer formed on at least one face of the core. For the positive electrode core, there can be used a foil of a metal such as aluminum or an aluminum alloy, which is stable in a potential range of the positive electrode 11, a film in which such a metal is provided on a surface layer thereof, and the like. The positive electrode mixture layer contains a positive electrode active material, a conductive agent such as acetylene black, and a binder such as polyvinylidene fluoride, and is preferably formed on each side of the positive electrode core. For the positive electrode active material, there is used, for example, a lithium-transition metal composite oxide.

The negative electrode 12 has a negative electrode core, and a negative electrode mixture layer formed on at least one face of the core. For the negative electrode core, there can be used a foil of a metal such as copper or a copper alloy, which is stable in a potential range of the negative electrode 12, a film in which such a metal is provided on a surface layer thereof, and the like. The negative electrode mixture layer contains a negative electrode active material and a binder such as styrene-butadiene rubber (SBR), and is preferably formed on each side of the negative electrode core. For the negative electrode active material, there is used, for example, graphite, or a silicon-containing compound.

The electrolyte may be an aqueous electrolyte, or may be a non-aqueous electrolyte. The electrolyte may be any of a liquid electrolyte and a solid electrolyte. In the present embodiment, a non-aqueous electrolyte is used for the electrolyte. The non-aqueous electrolyte contains a non-aqueous solvent, and an electrolyte salt dissolved in the non-aqueous solvent. For the non-aqueous solvent, there can be used, for example, esters, ethers, nitriles, amides, a mixed solvent containing at least two of those mentioned above, and the like. The non-aqueous solvent may also contain a halogen substitute in which at least a part of hydrogen of these solvents is substituted with a halogen atom such as fluorine. For the electrolyte salt, there is used, for example, a lithium salt such as LiPF₆.

The cylindrical battery 10 comprises insulating plates 19 and 20 arranged on the upper and lower sides of the electrode assembly 14, respectively. In the example illustrated in FIG. 1, a positive electrode lead 21 connected to the positive electrode 11 extends to the sealing assembly 17 side through a through hole of the insulating plate 19, and a negative electrode lead 22 connected to the negative electrode 12 extends to the bottom 16a side of the outer can 16 along the outside of the insulating plate 20. The positive electrode lead 21 is connected to an internal terminal plate 25 serving as a bottom plate of the sealing assembly 17, by welding or the like, and a rupture disk 26 electrically connected to the internal terminal plate 25 serves as a positive electrode external terminal. The negative electrode lead 22 is connected, by welding or the like, to an inner face of the bottom 16a of the outer can 16, and the outer can 16 serves as a negative electrode external terminal.

The outer can 16 is a metal-made container which opens at one end (upper end) in the axial direction, in which the bottom 16a has a disk shape, and the side wall 16b is formed into a cylindrical shape along an outer peripheral edge of the bottom 16a. The sealing assembly 17 is formed into a disk shape corresponding to a shape of the opening of the outer can 16. The gasket 18 is a resin-made annular member, and is adapted to ensure the sealing property of the interior of the battery and ensure electric insulation between the outer can 16 and the sealing assembly 17.

The outer can 16 has a crimped part 31 formed by bending inward an edge part of the opening so that the crimped part 31 presses the sealing assembly 17 with the gasket 18 interposed therebetween. In addition, the outer can 16 has a grooved part 30 formed by causing the side wall 16b to project inward from the outside and configured to support the sealing assembly 17 with the gasket 18 interposed between the outer can 16 and the sealing assembly 17. The grooved part 30 is formed into an annular shape along a circumferential direction of the outer can 16 by spinning the side wall 16a from the outside.

The crimped part 31 is formed by bending inward an opening edge (upper end part) of the outer can 16, and faces the grooved part 30 with the sealing assembly 17 and the gasket 18 interposed therebetween so that the sealing assembly 17 is held between the crimped part 31 and the grooved part 30. The crimped part 31 is formed into an annular shape along the circumferential direction of the outer can 16 in the same manner as the grooved part 30, and presses a peripheral edge of the sealing assembly 17 from above with the gasket 18 interposed between the crimped part 31 and the sealing assembly 17. Although details will be described later, a bent part 34 is formed to be slightly bent at an intermediate part of the crimped part 31.

The sealing assembly 17 is a disk-shaped member comprising a current interrupt device. The sealing assembly 17 has a stacked structure of the internal terminal plate 25, an insulating plate 27, and the rupture disk 26 in this order from the electrode assembly 14 side. The internal terminal plate 25 is a metal plate including an annular part 25a to which the positive electrode lead 21 is to be connected, and a thin central part 25b that is disconnected from the annular part 25a when an internal pressure of the battery exceeds a predetermined threshold. A vent hole 25c is formed in the annular part 25a.

The rupture disk 26 is disposed to face the internal terminal plate 25 with the insulating plate 27 interposed therebetween. In the insulating plate 27, an opening 27a is formed at a central part in the radial direction, and an vent hole 27b is formed in a portion overlapping with the vent hole 25c in the internal terminal plate 25. The rupture disk 26 has a vent part 26a that ruptures when the internal pressure of the battery exceeds a predetermined threshold, and the vent part 26a is connected, by welding or the like, to central part 25b of the internal terminal plate 25 with the opening 27a of the insulating plate 27 interposed therebetween. The insulating plate 27 insulates a portion other than a connection portion between the annular part 25a and the central part 25b of the vent part 26a.

The vent part 26a includes a downward projection projecting inward of the battery, and a thin part formed around the downward projection, and is formed at the central part in the radial direction of the rupture disk 26. In the cylindrical battery 10, the internal terminal plate 25 to which the positive electrode lead 21 is connected is electrically connected to the rupture disk 26, whereby there is formed a current pathway connecting from the electrode assembly 14 to the rupture disk 26. If an abnormality occurs in the battery, which causes an increase in the internal pressure of the battery, the internal terminal plate 25 breaks, and the central part 25b is disconnected from the annular part 25a, whereby the vent part 26a is deformed to project outward of the battery. Thus, the current pathway is cut off. If the internal pressure of the battery further increases, the vent part 26a ruptures, resulting in formation of a gas venting port.

Note that the structure of the sealing assembly is not limited to the structure illustrated in FIG. 1. The sealing assembly may have a stacked structure including two vent members, and may have a projected sealing assembly cap covering the vent member. The negative electrode lead may be connected to an inner face of the sealing assembly, and the positive electrode lead may be connected to an inner face of the outer can. In this case, the sealing assembly serves as the negative electrode external terminal, and the outer can serves as the positive electrode external terminal.

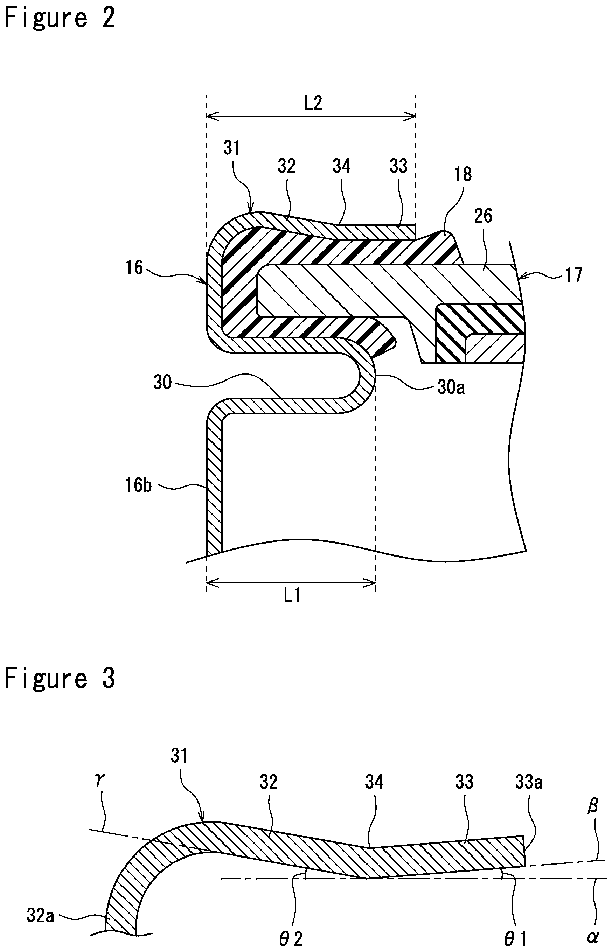

For example, a plurality of cylindrical batteries 10 are connected in series into a module. In a battery module including the plurality of cylindrical batteries 10, the external lead is connected, by welding or the like, to the crimped part 31 of the outer can 16 and the sealing assembly 17. When the external lead is connected to the crimped part 31, the size of the module can be reduced as compared with the case where the external lead is connected to the bottom 16a of the outer can 16. According to the cylindrical battery 10, the crimped part 31 can be extended to the inside in the radial direction of the outer can 16, and therefore the connection area of the external lead in the crimped part 31 can be sufficiently ensured, and the workability of the lead connection work can be improved. Note that the external lead is preferably welded to a second region 33 (see FIG. 2 which will be described later) serving as a distal end side portion of the crimped part 31.

Hereinafter, the grooved part 30 and the crimped part 31 of the outer can 16 will be described in detail with reference to FIGS. 2 and 3. FIG. 2 is an enlarged view of parts of the grooved part 30, the crimped part 31, and the sealing assembly 17, which are illustrated in FIG. 1, and FIG. 3 is an enlarged view of the crimped part 31.

As illustrated in FIG. 2, the grooved part 30 has a substantial U-shape in cross section, and supports the sealing assembly 17 on the upper face thereof. A length L1 of the grooved part 30 is, for example, 0.5 to 3 mm. Here, the length L1 of the grooved part 30 refers to a length from the side wall 16b to an inner end 30a of the grooved part 30 along the radial direction of the outer can 16. When the length L1 of the grooved part 30 is within the above-described range, the sealing assembly 17 can be stably supported while ensuring the mechanical strength of the outer can 16. Although when the length L1 of the grooved part 30 is increased, the deformation of the sealing assembly 17 can be reduced even when a length L2 of the crimped part 31 is increased, a problem is that the internal space of the battery is reduced when L1 is increased.

As described above, the crimped part 31 is a portion formed by bending inward the outer can 16 so that the crimped part 31 presses the peripheral edge of the sealing assembly 17 from above with the gasket 18 interposed between the crimped part 31 and the sealing assembly 17. The crimped part 31 is formed by bending inward the outer can 16 so that the opening edge (upper end part) of the outer can 16 faces the grooved part 30 with the sealing assembly 17 and the gasket 18 interposed therebetween. In the cylindrical battery 10, the crimped part 31 compresses the gasket 18, whereby the sealing property of the interior of the battery can be ensured.

In addition, the crimped part 31 preferably has a constant thickness. In other words, in the crimped part 31, there is preferably no thin part that is locally thin in thickness with no large unevenness and groove, step and the like. In this case, the strength of the crimped part 31 can be sufficiently ensured, and cracking or the like due to an impact applied to the battery, for example, can be prevented from occurring in the outer can 16.

The crimped part 31 includes a first region 32 serving as a proximal end side portion that is inclined downward so that a distance between the crimped part 31 and an outer face of the sealing assembly 17 decreases toward the inside of the outer can 16, and that strongly compresses the gasket 18 within such a range that the sealing assembly 17 is not deformed. The first region 32 has an R part, which greatly curves toward the outside of the outer can 16, in the vicinity of a proximal end 32a serving as a boundary position (i.e., a root of the crimped part 31) between the first region 32 and a position along the up-and-down direction of the side wall 16b, and extends inward in the radial direction of the outer can 16 from the R part. In the crimped part 31, the first region 32 especially strongly compresses the gasket 18, whereby the good sealing property of the interior of the battery can be ensured.

The crimped part 31 includes the second region 33 serving as a distal end side portion that is formed in parallel to the bottom 16a of the outer can 16 to be along the outer face of the sealing assembly 17 along the radial direction of the outer can 16. In the example illustrated in FIG. 2, the bent part 34 is in the intermediate part of the crimped part 31, and a portion from the bent part 34 to a distal end 33a in the crimped part 31 is formed in parallel to the bottom 16a. The formation of such a second region 33 makes it possible to reduce the pressure received from the crimped part 31 by the sealing assembly 17, whereby the deformation of the sealing assembly 17 can be prevented even when the crimped part 31 is extended. The presence of the flat and long second region 33 makes it possible to weld the external lead to the second region 33 with improved workability of the lead connection work. Note that in the conventional general cylindrical battery, the crimped part has a downward inclination from the R part to the distal end.

The bent part 34 is a boundary portion between the first region 32 that is inclined downward and the second region 33 that is parallel to the bottom 16a, where an extending direction of the crimped part 31 changes. The bent part 34 is formed to be slightly bent at the intermediate part of the crimped part 31 so that a projection toward the sealing assembly 17 side is formed. In the present embodiment, the bent part 34 is formed to be closer to the distal end 33a than the proximal end 32a, but the bent part 34 may be formed to be closer to the proximal end 32a or may be formed at a position substantially equidistant from the proximal end 32a and the distal end 33a.

As illustrated in FIG. 3, the second region 33 of the crimped part 31 may be inclined upward so that the distance between the second region 33 and the sealing assembly 17 increases toward the distal end 33a. In this case, in the bent part 34, the inclination direction of the crimped part 31 changes from the downward direction to the upward direction. Note that the second region 33 may be inclined downward in the same manner as the first region 32, but in this case, the second region 33 is inclined toward the sealing assembly 17 side at an angle smaller than an angle at the first region 32.

As a specific example, in the longitudinal cross section view of the outer can 16, an angle θ1 formed between a virtual line α parallel to the bottom 16a of the outer can 16 and a virtual line β along the second region 33 of the crimped part 31 is preferably within a range of ±3°. Here, when the angle Θ1 is positive, the second region 33 is inclined upward toward the distal end 33a, and when the angle θ1 is negative, the second region 33 is inclined downward toward the distal end 33a. When the second region 33 is parallel to the bottom 16a, the angle θ1 is 0°.

When the angle Θ1 is ±3°, the deformation of the sealing assembly 17 can be reduced more reliably. The angle Θ1 is more preferably -1.5 to 3°, and particularly preferably 0 to 3°. On the other hand, when the angle Θ1 exceeds +3°, for example, the workability of the external lead connection work may decrease, or the sealing property of the interior of the battery may deteriorate due to excessive reduction in the compression of the gasket 18 on the distal end 33a side of the crimped part 31.

In the longitudinal cross section view of the outer can 16, an angle θ2 formed between the virtual line α parallel to the bottom 16a of the outer can 16 and a virtual line γ along a downward inclination portion of the first region 32 is preferably within a range of 5 to 30°, more preferably 5 to 25°, and particularly preferably 5 to 20°. When the angle θ2 is within the above-described range, the gasket 18 can be strongly compressed to easily ensure the good sealing property of the interior of the battery while reducing the deformation of the sealing assembly 17.

As illustrated in FIG. 2, the length L2 of the crimped part 31 is preferably equal to or longer than the length L1 of the grooved part 30. In other words, the crimped part 31 preferably extends more inward in the radial direction of the outer can 16 than the inner end 30a of the grooved part 30. In this case, the connection area of the external lead in the crimped part 31 can be sufficiently ensured, and the workability of the lead connection work can be further improved. The length L1 of the crimped part 31 is, for example, 1.05 to 2 times of the length L2 of the grooved part 30, and preferably 1.1 to 1.5 times. An example of the length L2 is 1.5 to 3 mm.

The bent part 34 is formed in a region facing the grooved part 30. In other words, in the crimped part 31, the bent part 34 is formed on the proximal end 32a side closer than the position overlapping with the inner end 30a of the grooved part 30 in the up-and-down direction. In this case, the deformation of the sealing assembly 17 can be easily reduced even when the crimped part 31 is extended.

The crimped part 31 is formed by subjecting only a region having a predetermined length (e.g., 1 mm) from the upper end of the outer can 16 to a diameter-reduction process, thereafter inserting the sealing assembly 17 into the outer can 16, and using a crimping die to crimp the upper end of the outer can 16 into the sealing assembly 17 by plastic working. With the reduced diameter part being bent inward or outward at a predetermined angle in the diameter-reduction process, the inclination angle θ1 of the second region 33 may be freely adjustable.

The shape of the crimped part 31 may be formed in the initial stage of manufacturing the outer can 16. Alternatively, the upper end of the outer can 16 may be plastically worked while the crimping die is brought into contact only with the R part of the crimped part 31 in the outer can 16. In this case, for example, after crimping, the distal end 33a side springs back, whereby the bent part 34 is formed. The distal end 33a may further be processed after crimping to form the shape of the crimped part 31.

As described above, in the cylindrical battery 10, the crimped part 31 extends more inward in the radial direction of the outer can 16 than the grooved part 30. Then, the bent part 34 is formed in the crimped part 31, and the second region 33 serving as the distal end side portion is formed to be gently inclined within an angle range of ±3° with respect to the bottom 16a of the outer can 16 or to be parallel to the bottom 16a. In this case, the deformation of the sealing assembly 17 due to the pressure received from the crimped part 31 can be reduced even when the crimped part 31 is extended. According to the cylindrical battery 10, the connection area of the external lead in the crimped part 31 can be sufficiently ensured without causing deterioration of the performance due to the deformation of the sealing assembly 17, and the workability of the lead connection work can be improved when the cylindrical battery 10 is made into a module.

### REFERENCE SIGNS LIST

10 Cylindrical battery, 11 Positive electrode, 12 Negative electrode, 13 Separator, 14 Electrode assembly, 16 Outer can, 16a Bottom, 16b Side wall, 17 Sealing assembly, 18 Gasket, 19, 20 Insulating Plate, 21 Positive electrode lead, 22 Negative electrode lead, 25 Internal terminal plate, 25a Annular part 25b Central part, 25c Vent hole, 26 Rupture disk, 26a Vent part, 27 Insulating plate, 27a Opening, 27b Vent hole, 30 Grooved part, 30a inner end, 31 Crimped part, 32 First region, 32a Proximal end, 33 Second region, 33a Distal end, 34 Bent part

## Claims

1. A cylindrical battery, comprising:
an outer can that has a bottomed cylindrical shape;
a sealing assembly that seals an opening of the outer can; and
a gasket interposed between the outer can and the sealing assembly,
wherein the outer can has a crimped part formed by bending inward an edge part of the opening to press the sealing assembly with the gasket interposed between the crimped part and the sealing assembly, and
the crimped part includes a proximal end side portion that is inclined so that a distance between the crimped part and the sealing assembly decreases toward an inside of the outer can, and a distal end side portion that is inclined toward the sealing assembly side at an angle smaller than an angle at the proximal end side portion, is parallel to a bottom of the outer can, or is inclined so that a distance between the crimped part and the sealing assembly increases toward a distal end.

2. The cylindrical battery according to claim 1, wherein
the outer can has a grooved part formed to face the crimped part with the sealing assembly interposed between the outer can and the crimped part and configured to support the sealing assembly, and
a length of the crimped part is equal to or longer than a length of the grooved part.

3. The cylindrical battery according to claim 1 or 2, wherein
in a longitudinal cross section view of the outer can, an angle θ formed between a virtual line α parallel to a bottom of the outer can and a virtual line β along the distal end side portion of the crimped part is within a range of ±3°.

4. The cylindrical battery according to any one of claims 1 to 3, wherein
the crimped part has a constant thickness.
